# EUROPÄISCHE PATENTSCHRIFT

(11) **EP 1 184 595 B1**
(45) Veröffentlichungstag und Bekanntmachung des Hinweises auf die Patenterteilung: **05.07.2006**
(21) Anmeldenummer: 00250292.0
(22) Anmeldetag: 04.09.2000
(51) Int. Cl.: F16G 15/04

(54) **In Verbindung mit Gliederketten einsetzbares Bauteil**
Insertable element for connecting with a link chain
Elément insérable de liaison avec une chaine à maillons

(43) Veröffentlichungstag der Anmeldung: 06.03.2002
(73) Patentinhaber: RUD-Kettenfabrik Rieger & Dietz GmbH u. Co., 73432 Aalen-Unterkochen (DE)
(72) Erfinder: Smetz, Reinhard, 86720 Baldingen (DE)
(74) Vertreter: Böning, Manfred

(56) Entgegenhaltungen:
- EP-A- 0 736 150
- DE-U- 8 800 325
- FR-A- 910 342
- FR-A- 1 270 232
- GB-A- 943 068
- GB-A- 2 127 129

## Beschreibung

Die Erfindung betrifft ein in Verbindung mit einer Gliederkette, insbesondere Rundstahlkette einsetzbares Bauteil mit einem Grundkörper, der mindestens eine von einem Querschlitz und einem Längsschlitz gebildete Durchzieh- bzw. Einfädelöffnung für die Kette aufweist, wobei der Längsschlitz mit einer Verlängerung versehen ist, die zwischen zwei am Bauteil vorgesehene Stützzonen für den Bug eines zur Kraftübertragung zwischen dem Bauteil und der Kette dienenden Kettengliedes ragt, das mit dem in die Verlängerung eingeführten Kettenglied verbunden ist, welch letzteres durch ein Sicherungselement gegen eine Verlagerung aus der Verlängerung in den der Verlängerung abgewandten Abschnitt des Längsschlitzes gesichert ist.

Ein Bauteil der vorstehenden Art ist aus den Figuren 5 und 6 der FR-A 1 270 232 bekannt. Bei dem bekannten Bauteil wird das Sicherungselement von einem U-förmigen Bügel gebildet, der schwenkbar an einer hakenförmigen Platte gelagert ist, die einen Längsschlitz und einen an einer Seite offenen Querschlitz aufweist. Um die Kette gegen ein Herausrutschen aus dem Bauteil zu sichern, sind die Schenkel des Bügels mit an den Glieddurchmesser der Kettenglieder angepassten Nuten versehen. Unter Last - und nur unter Last - drückt ein sich im Längsschlitz leicht schräg stellendes Kettenglied mit einem seiner Längsschenkel gegen den Grund einer der Nuten und hält so das Sicherungselement in der Sicherungsposition. Die bekannte Konstruktion vermag insofern nicht zu befriedigen, als bei einem vorübergehenden Absetzen der Last die Sicherungsfunktion des Bügels nicht mehr gewährleistet ist.

Bei einem anderen, aus der EP 0 736 150 B1 bekannten, als Verkürzungsklaue ausgebildeten Bauteil der eingangs genannten Art überbrückt ein als Sperrstift ausgebildetes Sicherungselement den längeren der beiden einen Kreuzschlitz formenden Schlitze an einer Stelle, die zwischen dem Kreuzungsbereich der Schlitze und dem in die Verlängerung eingeführten Kettenglied liegt. Die Lösung bietet gegenüber der Lösung nach der FR-A 1 270 232 den Vorteil, dass das Sicherungselement in der Sicherungsposition nicht durch in der Kette wirksame, lastbedingte Kräfte beaufschlagt wird. Sie bringt es allerdings mit sich, dass die Längenunterschiede zwischen den beiden Schlitzen des Kreuzschlitzes vergleichsweise groß sein müssen. Berücksichtigt man, dass Schlitze ein Bauteil bei vorgegebenen Abmessungen im Schlitzbereich schwächen, so erweist es sich als sinnvoll, die Schlitzabmessungen so klein wie möglich zu halten.

Der Erfindung liegt die Aufgabe zugrunde, ein Bauteil der in Betracht gezogenen Art mit möglichst kleinen Schlitzabmessungen zu schaffen, bei dem die Sicherung unabhängig von den in der zu sichernden Kette auftretenden Kräfte funktioniert.

Gelöst wird diese Aufgabe erfindungsgemäß dadurch, dass das in den die Verlängerung aufweisenden Teil des Längsschlitzes eingeführte Kettenglied frei ist in seiner Verlagerung von der Verlängerung in den Kreuzungsbereich der Schlitze, es jedoch durch das Sicherungselement gegen eine weitere Verlagerung im Längsschlitz über den Kreuzungsbereich hinaus blockiert ist.

Das erfindungsgemäße Bauteil vereinigt die Vorteile der beiden zum Stand der Technik gehörenden, zuvor beschriebenen Bauteile in sich, ohne deren Nachteile in Kauf zu nehmen. Zu einer Einleitung problematischer Kräfte in das Sicherungselement durch die in der Kette wirksamen Kräfte kommt es ebenso wenig wie zu einer unerwünschten Schwächung des Bauteiles im Kreuzungsbereich der Schlitze.

Einzelheiten der Erfindung ergeben sich aus den Unteransprüchen und der nachstehenden Beschreibung mehrerer in der beigefügten Zeichnung dargestellter Ausführungsformen. Es zeigen:
- Fig. 1: die Vorderansicht eines als Verkürzungsklaue ausgebildeten Bauteiles;
- Fig. 2: einen Schnitt längs der Linie II-II in Fig. 1;
- Fig. 3: eine Draufsicht auf das obere, einen Kreuzschlitz aufweisende Ende der Verkürzungsklaue gemäß Fig. 1;
- Fig. 4: ein erstes modifiziertes Sicherungselement für die Verkürzungsklaue gemäß Fig. 1;
- Fig. 5: ein zweites modifiziertes Sicherungselement für die Verkürzungsklaue gemäß Fig. 1;
- Fig. 6: eine Draufsicht auf das einen offenen Kreuzschlitz aufweisende Ende eines anderen Bauteiles;
- Fig. 7: eine Draufsicht auf das einen Kreuzschlitz aufweisende Ende eines weiteren Bauteiles;
- Fig. 8: eine Draufsicht auf ein als Anschlagpunkt für eine Anschlagkette ausgebildetes Bauteil;
- Fig. 9: einen Schnitt längs der Linie IX-IX in Fig. 8;
- Fig. 10: einen Schnitt längs der Linie X-X in Fig. 8;
- Fig. 11: 333teilweise im Schnitt die Seitenansicht eines Bauteils für ein Zweistranggehänge;
- Fig. 12: die Seitenansicht des Bauteils gemäß Fig. 11 und
- Fig. 13: teilweise im Schnitt die Draufsicht auf die Schlitze des Bauteils gemäß Fig. 11.

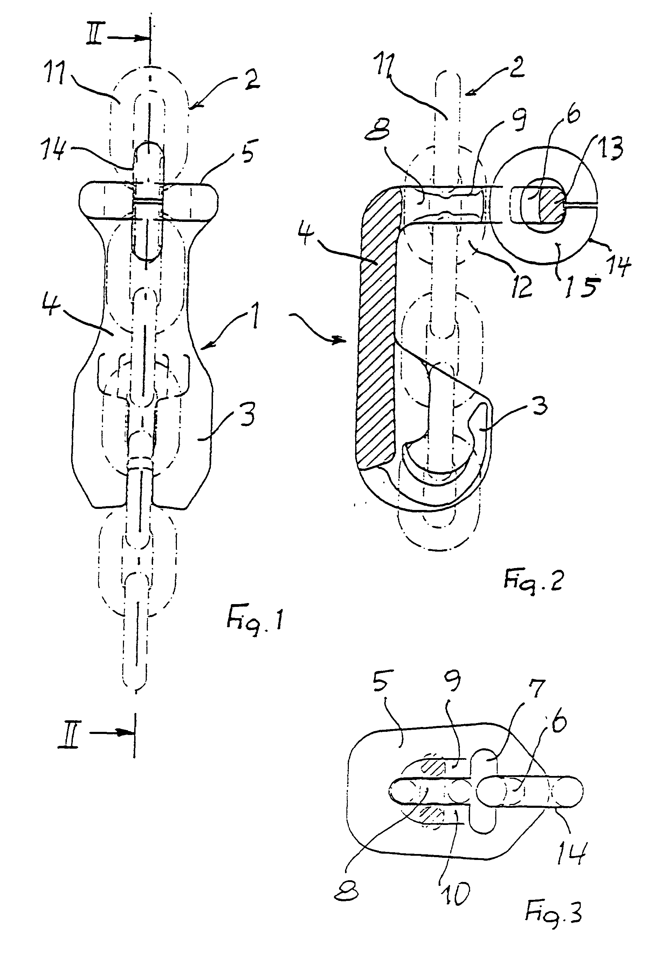

In den Figuren 1 bis 3 ist 1 der Grundkörper eines zum Verkürzen einer Kette 2 dienenden Bauteiles. Der Grundkörper 1 weist an seinem unteren Ende eine Klaue 3 auf, in die jeweils ein Glied der aus ovalen Rundstahlgliedern bestehenden Kette 2 einhängbar ist. Mit der Klaue 3 ist über einen Rücken 4 ein abgewinkeltes Ende 5 des Grundkörpers 1 verbunden. Im abgewinkelten Ende 5 befinden sich zwei sich kreuzende Schlitze 6 und 7, von denen einer mit einer Verlängerung 8 versehen ist. Die sich kreuzenden Schlitze 6 und 7 bilden in ihrem vom Rücken 4 abgewandten Kreuzungsbereich eine Durchziehöffnung für die Kette 2.

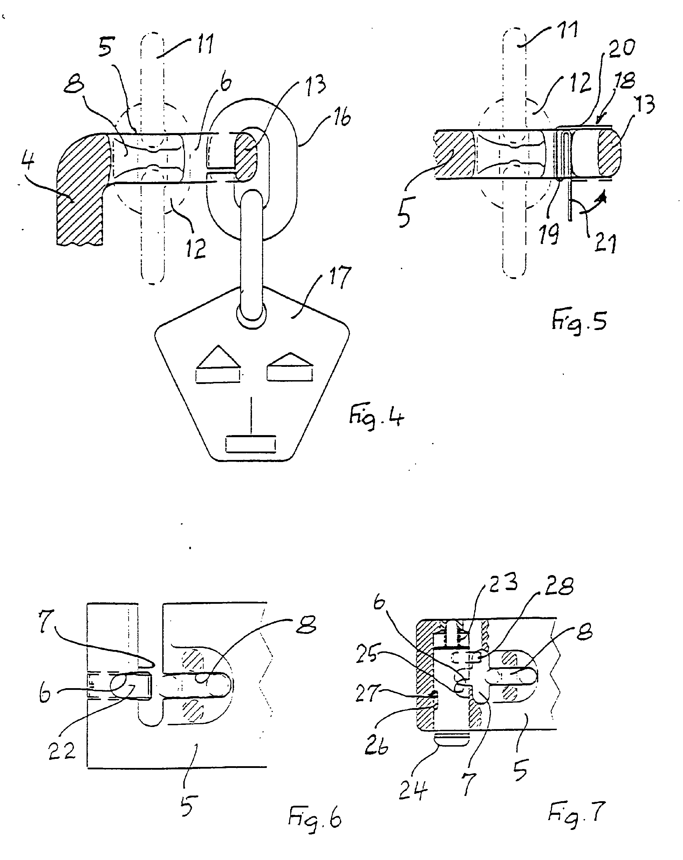

Im Bereich der Verlängerung 8 sind an der Oberseite des abgewinkelten Endes zwei Stützzonen 9 und 10 für den Bug des Gliedes 11 der Kette 2 vorgesehen. Um zu verhindern, daß das mit dem Glied 11 verbundene Glied 12 der Kette 2 in den Kreuzungsbereich der Schlitze 6, 7 zurückrutscht, wird das der Verlängerung 8 abgewandte Ende des Schlitzes 6 durch ein einen stegförmigen Abschnitt 13 des Endes 5 des Grundkörpers 1 umschließendes Sicherungselement 14 blockiert. Das Sicherungselement besteht im Falle der Figuren 1 bis 3 aus einem zu einem offenen kreisförmigen Ring gebogenen Drahtabschnitt 15. Anstelle des Sicherungselementes 14 läßt sich auch ein von einem offenen ovalen Kettenglied gebildetes Sicherungselement 16 verwenden, das zusätzlich zur Befestigung eines sogenannten Kennzeichnungsanhängers 17 genutzt werden kann. Eine weitere Sicherungsmöglichkeit zeigt die Fig. 5, bei der das Sicherungselement 18 von einem Blechstreifen gebildet wird, dessen über ein mehrfach gefaltetes Joch 19 miteinander verbundene Enden 20, 21 in der gesicherten Position gegen die sich gegenüberliegenden Seiten des stegförmigen Abschnittes 13 des Grundkörpers 1 anliegen.

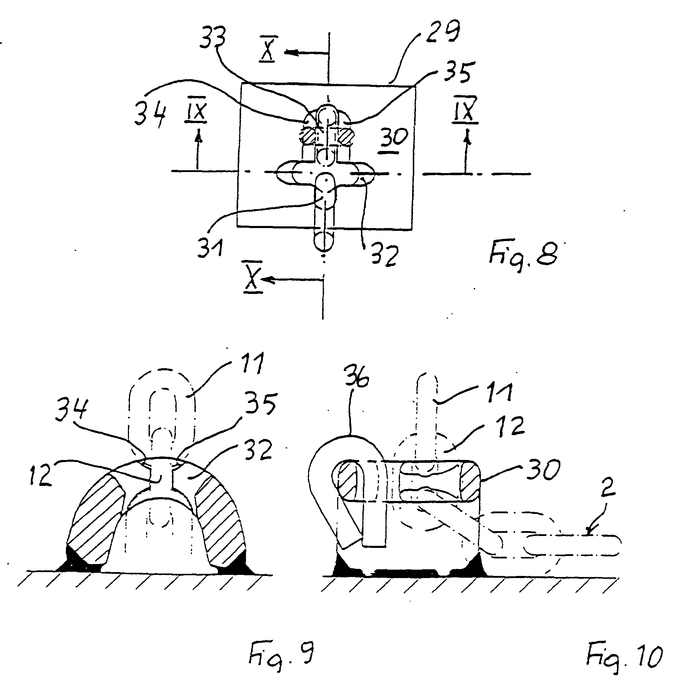

Wie in den bisher beschriebenen Fällen sind die Schlitze 6, 7 des Bauteiles auch in den in Fig. 6 und 7 dargestellten Lösungsvarianten im wesentlichen senkrecht zur Zugrichtung der eingeführten Kette 2 und in unmittelbarer Nähe einer dem Rücken 4 des Grundkörpers 1 gemäß den Figuren 1 bis 3 entsprechenden Abstützung angeordnet. Die Nähe des Kreuzschlitzes zur jeweiligen Abstützung wirkt sich dabei günstig auf die Belastung des Bauteiles durch Biegemomente aus.

Bei der Ausführungsform gemäß Fig. 6 dient zur Sicherung des Kettengliedes 12 in der Verlängerung 8 des Schlitzes 6 ein von einer Schraube gebildetes Sicherungselement 22, das gleichzeitig den in diesem Fall offenen Schlitz 7 schließt.

Fig. 7 zeigt eine weitere Lösung, die sich in den Fällen anbietet, in denen häufig verschiedene Glieder der Kette 2 zum Anschluß an ein Bauteil genutzt werden. Die bequemere Handhabbarkeit dieser Lösung muß allerdings mit einem erhöhten Aufwand erkauft werden. Das von einem gegen die Wirkung einer Feder 23 hin und her verschiebbaren Bolzen gebildete Sicherungselement 24 weist eine Quernut 25 auf, die unter Überwindung der Federkraft der Feder 23 in eine Position überführbar ist, in der sie den die Verlängerung 8 aufweisenden Schlitz der sich kreuzenden Schlitze 6, 7 freigibt. Der Verschiebeweg des Bolzens wird durch eine in eine Nut 26 greifende Spannhülse 27 begrenzt. Die Spannhülse 27 und ein am Bolzen angeordneter, von einem Stift gebildeter Vorsprung 28 verhindern eine Drehung des Sicherungselementes 24 um seine Längsachse.

Die Figuren 8 bis 10 zeigen einen sogenannten Anschlagpunkt, wie er beispielsweise an Maschinengestellen und Containern Verwendung findet. Der Grundkörper 29 besteht hier aus einem U-förmigen Bügel, der im Bereich seines Joches 30 mit dem von zwei Schlitzen 31, 32 gebildeten Kreuzschlitz versehen ist. Der Schlitz 31 ragt mit seiner Verlängerung 33 wiederum zwischen zwei Stützzonen 34, 35 für ein Glied 11 einer Kette 2. Zur Sicherung der Position des Kettengliedes 12 in der Verlängerung 33 des Schlitzes 31 dient hier wie im Falle der Figuren 1 bis 4 ein aus einem Drahtabschnitt gebogenes Sicherungselement 36.

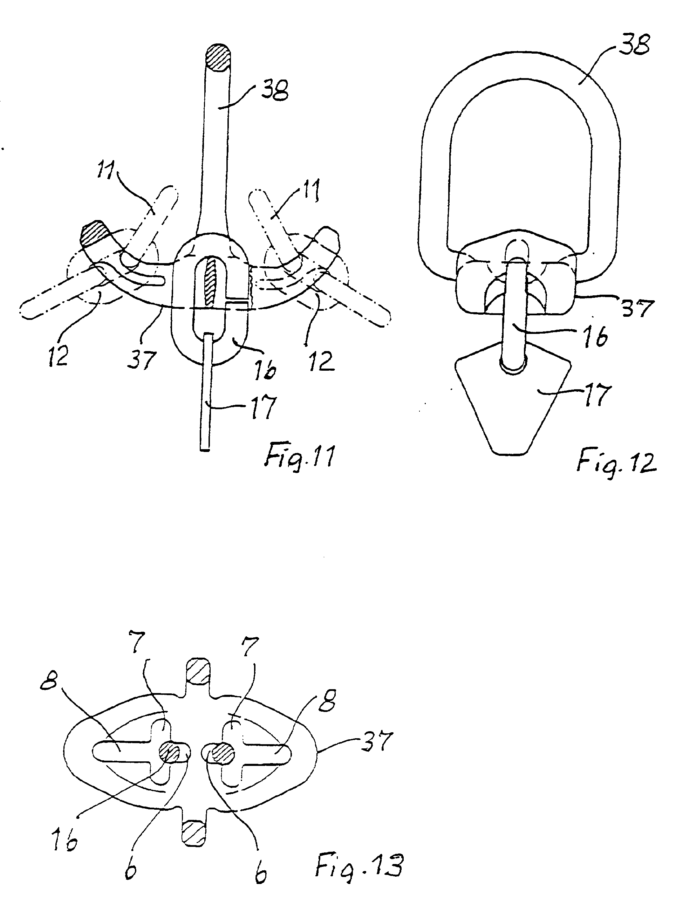

In den Figuren 11 bis 13 ist schließlich ein Bauteil dargestellt, das in Verbindung mit Zweistranggehängen zum Einsatz gelangt. Der Grundkörper 37 dieses Bauteils ist im wesentlichen T-förmig ausgebildet. In dem eine Art Joch bildenden Querbalken des T sind zwei Paare sich kreuzender Schlitze 6 und 7 angeordnet. Auch in diesem Fall sind die in die Verlängerungen 8 der Schlitze 6 eingeführten Kettenglieder 12 durch ein als Ovalglied ausgebildetes Sicherungselement 16 gegen eine Verlagerung in den Kreuzungsbereich der Schlitze 6,7 gesichert. Der dem Längsbalken des T entsprechende Teil des Grundkörpers 37 bildet einen ösenförmigen Aufhängekopf 38 für einen nicht dargestellten Kranhaken. 17 ist wie im Falle der Fig. 4 ein Kennzeichnungsanhänger.

## Patentansprüche

1. In Verbindung mit einer Gliederkette (2), insbesondere Rundstahlkette, einsetzbares Bauteil mit einem Grundkörper (1), der eine von einem Querschlitz (7; 32) und einem Längsschlitz (6; 31) gebildete Durchzieh- bzw. Einfädelöffnung für die Kette aufweist, wobei der Längsschlitz (6; 31) mit einer Verlängerung (8, 33) versehen ist, die zwischen zwei am Bauteil vorgesehene Stützzonen (9; 10) für den Bug eines zur Kraftübertragung zwischen dem Bauteil und der Kette (2) dienenden Kettengliedes (11) ragt, das mit dem in die Verlängerung (8, 33) eingeführten Kettenglied (12) verbunden ist, welch letzteres durch ein Sicherungselement (14; 16; 18; 22; 24; 36) gegen eine Verlagerung aus der Verlängerung (8, 33) in den der Verlängerung abgewandten Abschnitt des Längsschlitzes (6, 31) gesichert ist, **dadurch gekennzeichnet, dass** das in den die Verlängerung (8, 33) aufweisenden Teil des Längsschlitzes (6; 31) eingeführte Kettenglied (12) frei ist in seiner Verlagerung von der Verlängerung (8, 33) in den Kreuzungsbereich der Schlitze (6, 7; 31, 32), es jedoch durch das Sicherungselement (14; 16; 18; 22; 24; 36) gegen eine weitere Verlagerung im Längsschlitz (6; 31) über den Kreuzungsbereich hinaus blockiert ist.

2. Bauteil nach Anspruch 1, **dadurch gekennzeichnet, daß** sich die Schlitze (6, 7) jeweils eines Schlitzpaares im Bereich jeweils eines Endes des Grundkörpers (1) kreuzen, während die Verlängerung (8) des einen Schlitzes (6) zum Zentrum des Grundkörpers (1) gerichtet ist.

3. Bauteil nach Anspruch 1 oder 2, **dadurch gekennzeichnet, daß** die Stützzonen (9,10) für das zur Kraftübertragung dienende Kettenglied (11) an einem abgewinkelten Ende des Grundkörpers (1) angeordnet sind.

4. Bauteil nach Anspruch 1 oder 2, **dadurch gekennzeichnet, daß** die sich kreuzenden Schlitze (6, 7; 31, 32) im wesentlichen senkrecht zur Zugrichtung der Kette (2) angeordnet sind.

5. Bauteil nach einem der Ansprüche 1 bis 4, **dadurch gekennzeichnet, daß** das Sicherungselement (14; 16; 36) von einem einen stegförmigen Abschnitt (13) des Grundkörpers (1) umschließenden und die sich kreuzenden Schlitze (6, 7) passierenden, an seinen Enden zusammengebogenen Drahtabschnitt gebildet wird.

6. Bauteil nach Anspruch 5, **dadurch gekennzeichnet, daß** das Sicherungselement (14) als Ringglied ausgebildet ist.

7. Bauteil nach Anspruch 5, **dadurch gekennzeichnet, daß** das Sicherungselement (16) als Ovalglied ausgebildet ist.

8. Bauteil nach Anspruch 7, **dadurch gekennzeichnet, daß** mit dem Ovalglied ein Kennzeichnunganhänger (17) verbunden ist.

9. Bauteil nach einem der Ansprüche 1 bis 4, **dadurch gekennzeichnet, daß** das Sicherungselement (18) von einem Blechstreifen gebildet wird, dessen durch ein in einem der sich kreuzenden Schlitze (6, 7) angeordnetes Joch (19) miteinander verbundene Enden (20, 21) einen Abschnitt (13) des Grundkörpers (1) gabelartig umfassen.

10. Bauteil nach einem der Ansprüche 1 bis 4, **dadurch gekennzeichnet, daß** das Sicherungselement (22) von einer Schraube gebildet wird, die in das der Verlängerung (8) abgewandte Ende des die Verlängerung (8) aufweisenden Schlitzes (6) eingeschraubt ist.

11. Bauteil nach einem der Ansprüche 1 bis 4, **dadurch gekennzeichnet, daß** das Sicherungselement (24) von einem gegen die Wirkung einer Feder (23) senkrecht zum die Verlängerung (8) aufweisenden Schlitz (6) verlagerbaren Bolzen gebildet wird, der mit einer Quernut (25) versehen ist, die unter Überwindung der Federkraft in eine Position überführbar ist, in der der Bolzen die sich kreuzenden Schlitze (6, 7) freigibt.

12. Bauteil nach Anspruch 11, **dadurch gekennzeichnet, daß** der Bolzen mit mindestens einem Vorsprung (28) versehen ist, der in der Sicherungsstellung des Bolzens in den parallel zum Bolzen angeordneten Schlitz (7) der sich kreuzenden Schlitze (6, 7) ragt.

13. Bauteil nach Anspruch 12, **dadurch gekennzeichnet, daß** der Vorsprung (28) eine Drehsicherung für den Bolzen bildet.

14. Bauteil nach einem der Ansprüche 1 bis 13, **dadurch gekennzeichnet, daß** sein Grundkörper (29) von einem im wesentlichen U-förmigen Bügel gebildet wird, in dessen Joch (30) die sich kreuzenden Schlitze (31, 32) angeordnet sind.

15. Bauteil nach einem der Ansprüche 1 bis 14, **dadurch gekennzeichnet, daß** der senkrecht zum die Verlängerung (8) aufweisenden Schlitz (6) verlaufende Schlitz (7) an einem seiner beiden Enden offen ist.

16. Bauteil nach Anspruch 1, **dadurch gekennzeichnet, daß** sein Grundkörper (37) im wesentlichen T-förmig ausgebildet ist.

17. Bauteil nach Anspruch 16, **dadurch gekennzeichnet, daß** der dem Querbalken des T entsprechende Teil des Grundkörpers (37) mit zwei Paaren sich kreuzender Schlitze (6,7) versehen ist, während der dem Längsbalken des T entsprechende Teil des Grundkörpers (37) einen ösenförmigen Aufhängekopf (38) bildet.

18. Bauteil nach Anspruch 17, **dadurch gekennzeichnet, daß** beiden Schlitzpaaren (6,7) ein gemeinsames Sicherungselement (16) zugeordnet ist.

## Claims

1. Component which can be used in conjunction with a link chain (2), in particular round steel chain, and has a basic body (1) which has a pull-through or insertion opening, formed by a transverse slot (7; 32) and a longitudinal slot (6; 31), for the chain, the longitudinal slot (6; 31) being provided with an extension (8, 33) which projects between two support zones (9; 10) which are provided on the component and are intended for the front end of a chain link (11) which serves for transmitting force between the component and the chain (2) and is connected to the chain link (12) which is introduced into the extension (8, 33), the latter chain link being secured by a securing element (14; 16; 18; 22; 24; 36) against displacement from the extension (8, 33) into that section of the longitudinal slot (6, 31) which is directed away from the extension, **characterized in that** the chain link (12) which is introduced into that part of the longitudinal slot (6; 31) which has the extension (8, 33) is free for displacement from the extension (8, 33) into the crossover region of the slots (6, 7; 31, 32), but it is blocked by the securing element (14; 16; 18; 22; 24; 36) against further displacement in the longitudinal slot (6; 31) beyond the crossover region.

2. Component according to Claim 1, **characterized in that** the slots (6, 7) of a pair of slots in each case cross over in the region of one end of the basic body (1) in each case, while the extension (8) of one slot (6) is directed towards the centre of the basic body (1).

3. Component according to Claim 1 or 2, **characterized in that** the supporting zones (9, 10) for the chain link (11) which serves for transmitting force are arranged at an angle end of the basic body (1).

4. Component according to Claim 1 or 2, **characterized in that** the crossover slots (6, 7; 31, 32) are arranged essentially perpendicularly to the pulling direction of the chain (2).

5. Component according to one of Claims 1 to 4, **characterized in that** the securing element (14; 16; 36) is formed by a section of wire which encloses a crosspiece-like section (13) of the basic body (1), passes through the crossover slots (6, 7) and is bent together at its ends.

6. Component according to Claim 5, **characterized in that** the securing element (14) is designed as a ring link.

7. Component according to Claim 5, **characterized in that** the securing element (16) is designed as an oval link.

8. Component according to Claim 7, **characterized in that** an identification tag (17) is connected to the oval link.

9. Component according to one of Claims 1 to 4, **characterized in that** the securing element (18) is formed by a sheet-metal strip, of which the ends (20, 21), which are connected to one another by a yoke (19) arranged in one of the crossover slots (6, 7), enclose a section (13) of the basic body (1) in a fork-like manner.

10. Component according to one of Claims 1 to 4, **characterized in that** the securing element (22) is formed by a screw which is screwed into that end of the slot (6), having the extension (8), which is directed away from the extension (8).

11. Component according to one of Claims 1 to 4, **characterized in that** the securing element (24) is formed by a bolt which can be displaced, counter to the action of a spring (23), perpendicularly to the slot (6), having the extension (8), and is provided with a transverse groove (25) which, overcoming the spring force, can be transferred into a position in which the bolt releases the crossover slots (6, 7).

12. Component according to Claim 11, **characterized in that** the bolt is provided with at least one protrusion (28) which, in the securing position of the bolt, projects into the slot (7) of the crossover slots (6, 7) which is arranged parallel to the bolt.

13. Component according to Claim 12, **characterized in that** the protrusion (28) forms a rotation-prevention means for the bolt.

14. Component according to one of Claims 1 to 13, **characterized in that** its basic body (29) is formed by an essentially U-shaped bracket, in the yoke (30) of which the crossover slots (31, 32) are arranged.

15. Component according to one of Claims 1 to 14, **characterized in that** the slot (7), running perpendicularly to the slot (6), having the extension (8), is open at one of its two ends.

16. Component according to Claim 1, **characterized in that** its basic body (37) is of essentially T-shaped design.

17. Component according to Claim 16, **characterized in that that** part of the basic body (37) which corresponds to the crossbar of the T is provided with two pairs of crossover slots (6, 7), while that part of the basic body (37) which corresponds to the longitudinal bar of the T forms an eyelet-like suspension head (38).

18. Component according to Claim 17, **characterized in that** the two pairs of slots (6, 7) are assigned a joint securing element (16).

## Revendications

1. Elément insérable en liaison avec une chaîne à maillons (2), en particulier une chaîne en acier rond, comprenant un corps de base (1), qui présente, pour la chaîne, une ouverture de passage ou d'insertion formée par une fente transversale (7; 32) et une fente longitudinale (6; 31), la fente longitudinale (6; 31) étant pourvue d'un prolongement (8, 33), qui dépasse entre deux zones d'appui (9; 10) prévues sur l'élément pour l'avant d'un maillon de chaîne (11) servant au transfert de forces entre l'élément et la chaîne (2), ledit maillon étant relié au maillon de chaîne (12) inséré dans le prolongement (8, 33) et étant fixé par un élément de fixation (14; 16; 18; 22; 24; 36) pour s'opposer à un déplacement depuis le prolongement (8, 33) dans la section, opposée au prolongement, de la fente longitudinale (6, 31), **caractérisé en ce que** le maillon de chaîne (12) inséré dans la partie de la fente longitudinale (6; 31) présentant le prolongement (8, 33) est libre de se déplacer depuis le prolongement (8, 33) dans la zone de croisement des fentes (6, 7; 31, 32), mais est empêché par l'élément de fixation (14; 16; 18; 22; 24; 36) de se déplacer dans la fente longitudinale (6; 31) au-delà de la zone de croisement.

2. Elément selon la revendication 1, **caractérisé en ce que** les fentes (6, 7), respectivement, d'une paire de fentes se croisent dans la zone, respectivement, d'une extrémité du corps de base (1), tandis que le prolongement (8) de la première fente (6) est dirigé vers le centre du corps de base (1).

3. Elément selon la revendication 1 ou 2, **caractérisé en ce que** les zones d'appui (9, 10) pour le maillon de chaîne (11) servant au transfert de forces sont aménagées à une extrémité coudée du corps de base (1).

4. Elément selon la revendication 1 ou 2, **caractérisé en ce que** les fentes croisées (6, 7; 31, 32) sont ménagées sensiblement perpendiculairement à la direction de traction de la chaîne (2).

5. Elément selon l'une quelconque des revendications 1 à 4, **caractérisé en ce que** l'élément de fixation (14; 16; 36) est formé par une section de fil métallique recourbée à ses extrémités entourant une section d'aile (13) du corps de base (1) et passant par les fentes croisées (6, 7).

6. Elément selon la revendication 5, **caractérisé en ce que** l'élément de fixation (14) se présente sous la forme d'un élément annulaire.

7. Elément selon la revendication 5, **caractérisé en ce que** l'élément de fixation (16) se présente sous la forme d'un élément ovale.

8. Elément selon la revendication 7, **caractérisé en ce qu'**un élément d'identification suspendu (17) est relié à l'élément ovale.

9. Elément selon l'une quelconque des revendications 1 à 4, **caractérisé en ce que** l'élément de fixation (18) est formé d'un ruban de tôle dont les extrémités (20, 21), reliées l'une à l'autre par une culasse (19) aménagée dans une des fentes croisées (6, 7), enserrent une section (13) du corps de base (1) en forme d'étrier.

10. Elément selon l'une quelconque des revendications 1 à 4, **caractérisé en ce que** l'élément de fixation (22) est formé par une vis qui est vissée dans l'extrémité, opposée au prolongement (8), de la fente (6) présentant le prolongement (8).

11. Elément selon l'une quelconque des revendications 1 à 4, **caractérisé en ce que** l'élément de fixation (24) est formé par un boulon déplaçable, à l'encontre de l'action d'un ressort (23), perpendiculairement à la fente (6) présentant le prolongement (8), ledit boulon étant pourvu d'une rainure transversale (25) qui peut, en contrecarrant la force du ressort, être transféré dans une position dans laquelle le boulon libère les fentes croisées (6, 7).

12. Elément selon la revendication 11, **caractérisé en ce que** le boulon est pourvu d'au moins une saillie (28) qui dépasse dans la position de fixation du boulon dans la fente (7), agençée parallèlement au boulon, des fentes croisées (6, 7) .

13. Elément selon la revendication 12, **caractérisé en ce que** la saillie (28) forme une fixation en rotation pour le boulon.

14. Elément selon l'une quelconque des revendications 1 à 13, **caractérisé en ce que** son corps de base (29) est formé par un étrier sensiblement en forme de U, dans la culasse (30) duquel sont ménagées les fentes croisées (31, 32).

15. Elément selon l'une quelconque des revendications 1 à 14, **caractérisé en ce que** la fente (7) s'étendant perpendiculairement à la fente (6) présentant le prolongement (8) est ouverte à ses deux extrémités.

16. Elément selon la revendication 1, **caractérisé en ce que** son corps de base (37) se présente sous une forme sensiblement en T.

17. Elément selon la revendication 16, **caractérisé en ce que** la partie du corps de base (37) correspondant à la barre transversale du T est pourvue de deux paires de fentes croisée (6, 7), tandis que la partie du corps de base (37) correspondant à la barre longitudinale du T forme une tête de suspension (38) en forme d'oeillet.

18. Elément selon la revendication 17, **caractérisé en ce qu'**un élément de fixation commun (16) est affecté aux deux paires de fentes (6, 7).
